# EUROPÄISCHE PATENTSCHRIFT

(11) **EP 3 015 821 B1**
(45) Veröffentlichungstag und Bekanntmachung des Hinweises auf die Patenterteilung: **14.03.2018**
(21) Anmeldenummer: 15191837.2
(22) Anmeldetag: 28.10.2015
(51) Int. Cl.: G01C 21/32, G01C 21/36

(54) **AUSGEBEN EINER RICHTUNGSANWEISUNG MIT EINER NAVIGATIONSEINRICHTUNG**
ISSUING OF A DIRECTION INSTRUCTION WITH A NAVIGATION DEVICE
FOURNITURE D'UNE INDICATION DE DIRECTION A L'AIDE D'UN SYSTEME DE NAVIGATION

(30) Priorität: 29.10.2014 DE 102014015903
(43) Veröffentlichungstag der Anmeldung: 04.05.2016
(73) Patentinhaber: Preh Car Connect GmbH, 01156 Dresden (DE)
(72) Erfinder: van de Renne, David, 01445 Radebeul (DE); Jaenicke, Ronald, 01723 Grumbach (DE)

(56) Entgegenhaltungen:
- EP-A1- 2 848 892
- DE-A1- 19 836 156

## Beschreibung

Die Erfindung betrifft ein Verfahren zum Ausgeben einer Richtungsanweisung mit einer Navigationseinrichtung und eine Navigationseinrichtung zum Ausführen des Verfahrens.

Eine herkömmliche Navigationseinrichtung ist in der Lage, eine Route zu berechnen, die von einer aktuellen Position der Navigationseinrichtung zu einer vorgegebenen Zielposition führt. Die Position der Navigationseinrichtung wird meist unter Verwendung eines Satellitennavigationssystems bestimmt, beispielsweise mittels GPS, GLONASS, COMPASS oder GALILEO. Die Zielposition wird in der Regel aus einem Ziel abgeleitet, das ein Benutzer der Navigationseinrichtung über eine Bedieneinheit in die Navigationseinrichtung eingibt.

Die Route kann mittels einer Recheneinheit der Navigationseinrichtung berechnet werden, wozu die Recheneinheit einen Routen-Berechnungsalgorithmus ausführt. Bei der Routenberechnung werden Landkartendaten verwendet, die in der Regel in einer nichtflüchtigen Speichereinheit der Navigationseinrichtung gespeichert sind, beispielsweise auf einer CD-ROM, auf einer Festplatte oder in einem Flash-Speicher.

Die Landkartendaten repräsentieren Objekte, die sich in einem bestimmten geografischen Gebiet befinden, und den Objekten zugeordnete Informationen. Zu den Objekten gehören unter anderem Straßen und Straßenkreuzungen. Unter dem Begriff "Straße" wird hierin ein Verkehrsweg verstanden, welcher befahrbar oder begehbar ist, einschließlich eines Waldwegs, eines Feldwegs und eines Fußwegs. Unter dem Begriff "Straßenkreuzung" wird hierin eine Mehrzahl von Straßenabschnitten derartiger Straßen verstanden, die an einem gemeinsamen Punkt zusammentreffen, einschließlich einer Auffahrt, einer Abfahrt oder einer Abzweigung.

Eine solche Straßenkreuzung wird in den Landkartendaten von mehreren Vektoren, sogenannten "Straßensegmente", dargestellt, die jeweils einen der Straßenabschnitte repräsentieren. Der Punkt, an dem die Straßensegmente zusammentreffen, wird als "Knotenpunkt" bezeichnet. Die Straßenkreuzung verfügt über Merkmale, die in den Landkartendaten von Parametern repräsentiert werden, denen jeweils ein Wert zugeordnet ist. Ein solcher Parameter ist beispielsweise der Rang eines Straßensegments, welcher die Bedeutung des zugeordneten Straßenabschnitts repräsentiert, oder der Winkel zwischen zwei Straßensegmenten. Eine konkrete Ausprägung eines solchen Parameters wird als "Attribut" bezeichnet.

Es versteht sich, dass es sich bei der Darstellung der Straßenkreuzung in den Landkartendaten um ein Modell der realen Straßenkreuzung handelt. Naturgemäß kann das Modell die an der Straßenkreuzung tatsächlich vorliegenden Verhältnisse nur unvollständig wiedergeben.

Nach der Routenberechnung kann die Route oder ein Abschnitt der Route auf einem der Navigationseinrichtung zugeordneten Bildschirm angezeigt werden. Dadurch kann der Benutzer eine räumliche Vorstellung von der Route oder von einem vor ihm liegenden Routenabschnitt entwickeln. Das ermöglicht dem Benutzer beispielsweise, Fahrmanöver vorausschauend zu planen.

Ferner kann nach der Routenberechnung eine Zielführung gestartet werden. Als Zielführung bezeichnet man einen Prozess, der den Benutzer entlang der Route leitet. Während der Zielführung gibt die Navigationseinrichtung optische und/oder akustische Handlungsanweisungen, sogenannte "Manöveranweisungen", an den Benutzer aus. Die Manöveranweisungen werden von der Recheneinheit unter Berücksichtigung der Route, der Landkartendaten und einer aktuellen Position der Navigationseinrichtung erzeugt und unter Verwendung einer Ausgabeeinheit der Navigationseinrichtung an den Benutzer ausgegeben.

Zu den Manöveranweisungen gehören unter anderem Richtungsanweisungen, die an Straßenkreuzungen an den Benutzer ausgegeben werden. Solch eine Richtungsanweisung lautet beispielsweise "An der nächsten Kreuzung nach links abbiegen". Eine derartige Richtungsanweisung basiert auf einer Richtungsangabe, welche eine Richtung angibt, die der Benutzer an einer Straßenkreuzung einschlagen soll, um die Route weiter zu verfolgen. Bei der Richtungsangabe handelt es sich beispielsweise um "geradeaus", "leicht rechts", "rechts", "scharf rechts", "wenden", "scharf links", "links" oder "leicht links". Die Richtungsangabe wird auch als "Abbiegerichtung" bezeichnet.

Zum Erzeugen der Richtungsangabe generiert die Navigationseinrichtung zunächst eine sogenannte "Kreuzungsgeometrie". Die Kreuzungsgeometrie ist eine Abstraktion der Straßenkreuzung und wird anhand der Landkartendaten erstellt, welche die Straßenkreuzung repräsentieren. Neben den Landkartendaten wird beim Erstellen der Kreuzungsgeometrie auch ein Eingangssegment der Kreuzung berücksichtigt, welches sich aus dem Routenverlauf ergibt. Bei dem Eingangssegment handelt es sich um dasjenige Straßensegment der Straßenkreuzung, welches den Straßenabschnitt repräsentiert, auf dem der Benutzer gemäß dem Routenverlauf zu der Straßenkreuzung geführt werden soll.

Basierend auf dem Eingangssegment wird jedes der anderen Straßensegmente der Straßenkreuzung einem sogenannten "Abbiegesektor" zugeordnet. Analog zu den oben genannten Richtungen wird ein solcher Abbiegesektor beispielsweise als "geradeaus", "leicht rechts", "rechts", "scharf rechts", "scharf links", "links" oder "leicht links" bezeichnet. Das Eingangssegment wird grundsätzlich dem Abbiegesektor "wenden" zugeordnet.

Für das Zuordnen der Straßensegmente zu den Abbiegesektoren wird ein fest vorgegebenes Regelwerk verwendet. Das Regelwerk liegt in Form eines Rechenalgorithmus vor, der als Computerprogramm realisiert ist. Das Regelwerk weist verschiedene Regeln und Parameterschwellenwerte auf, welche das Berücksichtigen von Attributen der Straßenkreuzung bei der Zuordnung der Straßensegmente zu den Abbiegesektoren ermöglichen. Die Parameterschwellenwerte eines Regelwerks werden als "Parametersatz" bezeichnet. Ein solcher Parametersatz kann unter anderem in Form einer Datei vorliegen, welche als "Parameterdatei" bezeichnet wird.

Bei den Attributen handelt es sich beispielsweise um Winkel zwischen den Straßensegmenten oder um Ränge, welche den einzelnen Straßensegmenten zugeordnet sind. Ferner kann es sich bei den Attributen um Vorfahrtsregelungen oder Geschwindigkeitsbegrenzungen handeln. Unter anderem gehört zu den Attributen ein sogenannter "Abbiegewinkel", bei dem es sich um den Winkel zwischen einem Ausgangssegment und einer gedachten geraden Verlängerung des Eingangssegments handelt.

Einige der in einem solchen Regelwerk enthaltenen Regeln seien hier beispielhaft aufgeführt:
a) Das Eingangssegment wird immer dem Abbiegesektor "wenden" zugeordnet.
b) Das Straßensegment mit dem kleinsten Abbiegewinkel wird dem Abbiegesektor "geradeaus" zugeordnet, wenn der Abbiegewinkel kleiner als 45 Grad ist und das Straßensegment mit dem nächstgrößeren Abbiegewinkel auf derselben Seite der Straßenkreuzung liegt.
c) Das Straßensegment mit dem kleinsten Abbiegewinkel wird dem Abbiegesektor "geradeaus" zugeordnet, wenn dieser Abbiegewinkel kleiner als 37 Grad ist, das Straßensegment mit dem nächstgrößeren Abbiegewinkel auf der gegenüberliegenden Seite der Straßenkreuzung liegt und der nächstgrößere Abbiegewinkel mindestens 10 Grad größer ist als der kleinste Abbiegewinkel.
d) Das Straßensegment mit dem größeren Abbiegewinkel wird dem Abbiegesektor "geradeaus" zugeordnet, wenn es genau drei Straßensegmente am Knotenpunkt gibt, der Rang des Eingangssegments gleich dem Rang des Straßensegments mit dem größeren Abbiegewinkel ist, der größere Abbiegewinkel kleiner als 15 Grad ist und das verbleibende Straßensegment einen unbedeutenden Rang hat.
e) Alle Straßensegmente rechts von dem Straßensegment, das dem Abbiegesektor "geradeaus" zugeordnet wurde, werden einem der Abbiegesektoren "leicht rechts", "rechts" und "scharf rechts" zugeordnet.
f) Alle Straßensegmente links von dem Straßensegment, das dem Abbiegesektor "geradeaus" zugeordnet wurde, werden einem der Abbiegesektoren "leicht links", "links" und "scharf links" zugeordnet.
g) Von mehreren Straßensegmenten rechts von dem Straßensegment, das dem Abbiegesektor "geradeaus" zugeordnet wurde, wird das Straßensegment mit dem kleinsten Abbiegewinkel dem Abbiegesektor "leicht rechts" zugeordnet.
h) Von mehreren Straßensegmenten links von dem Straßensegment, das dem Abbiegesektor "geradeaus" zugeordnet wurde, wird das Straßensegment mit dem kleinsten Abbiegewinkel dem Abbiegesektor "leicht links" zugeordnet.
i) An einer Straßenkreuzung mit vier Straßensegmenten wird das mittlere der Straßensegmente, die dem Eingangssegment gegenüberliegen, dem Abbiegesektor "geradeaus" zugeordnet, wenn der Abbiegewinkel des Straßensegments nicht größer als 70 Grad ist, der Abbiegewinkel des Straßensegments der kleinste Abbiegewinkel ist, der Rang des Straßensegments gleich dem Rang des Eingangssegments ist und die Ränge der beiden anderen Segmente übereinstimmen.

Unter Verwendung der Kreuzungsgeometrie lässt sich die Straßenkreuzung auf einem Bildschirm der Ausgabeeinheit so darstellen, dass der Benutzer bereits vor dem Erreichen der Straßenkreuzung eine genaue Vorstellung von den dortigen Abbiegemöglichkeiten entwickeln kann.

Zum Erzeugen der Richtungsangabe wird nach dem Generieren der Kreuzungsgeometrie eines der Straßensegmente der Straßenkreuzung als Ausgangssegment ausgewählt. Bei dem Ausgangssegment handelt es sich um das Straßensegment, das den Straßenabschnitt repräsentiert, auf dem der Benutzer von der Straßenkreuzung weggeführt werden soll. Ferner wird der Abbiegesektor ermittelt, dem das Ausgangssegment entsprechend der Kreuzungsgeometrie zugeordnet ist, beispielsweise der Abbiegesektor "links". Die gesuchte Richtungsangabe entspricht dem Abbiegesektor.

Die Richtungsanweisung wird auf Basis der Richtungsangabe unter Berücksichtigung weiterer Informationen, beispielsweise einer Entfernung der Navigationseinrichtung von der Straßenkreuzung, erzeugt. Die Richtungsanweisung kann unter Verwendung der Ausgabeeinheit an einen Benutzer der Navigationseinrichtung ausgegeben werden, beispielsweise visuell oder akustisch.

Liegt das Ausgangssegment im Abbiegesektor "geradeaus", wird in der Regel auf das Ausgeben einer akustischen Richtungsanweisung verzichtet. Daher versteht der Benutzer eine fehlende akustische Ausgabe einer Richtungsanweisung an einer Straßenkreuzung normalerweise als Aufforderung, seinen Weg geradeaus fortzusetzen. Eine Navigationseinrichtung mit einer Speichereinheit, in der Landkartendaten, die eine Mehrzahl von Straßenkreuzungen repräsentieren, und ein Regelwerk zum Zuordnen von Straßensegmenten zu Abbiegerichtungen, bzw. zum Erzeugen einer Richtungsanweisung für eine Straßenkreuzung gespeichert sind, und mit einer Recheneinheit zum Bestimmen einer Route, Auswählen einer Straßenkreuzung, welche von der Route passiert wird, aus der Mehrzahl von Straßenkreuzungen, Bestimmen eines Eingangssegments und eines Ausgangssegments der Straßenkreuzung anhand der Route, Erzeugen einer Richtungsangabe für die Straßenkreuzung unter Verwendung des Regelwerks, wobei das Eingangssegment, das Ausgangssegment und diejenigen Landkartendaten, welche die Straßenkreuzung repräsentieren, berücksichtigt werden, und Erzeugen einer Richtungsanweisung für die Straßenkreuzung basierend auf der Richtungsangabe, sowie mit einer Ausgabeeinheit zum Ausgeben der Richtungsanweisung an einen Benutzer der Navigationseinrichtung, ist beispielsweise aus dem Dokument DE19836156 bekannt.

Eine Richtungsanweisung soll für den Benutzer stets klar verständlich sein, so dass der Benutzer der Route problemlos folgen kann. In der Praxis kommt es jedoch oft vor, dass eine Richtungsanweisung für den Benutzer nicht klar verständlich ist. Das ist darin begründet, dass die Zuordnung eines Ausgangssegments zu einem Abbiegesektor nicht der subjektiven Wahrnehmung des Benutzers entspricht. Mit anderen Worten ist die Zuordnung für den Benutzer nicht nachvollziehbar.

Das kann dazu führen, dass der Benutzer ein falsches Abbiegemanöver ausführt. Dadurch kann der Benutzer von der Route abkommen und sein Ziel später als geplant erreichen. Ferner können Irritationen beim Benutzer erzeugt werden, die zu einem gefährlichen Fahrmanöver führen. Derartige Probleme treten besonders dann auf, wenn die zum Erstellen des Regelwerks verwendeten Landkartendaten und die zum Erzeugen der Richtungsanweisung verwendeten Landkartendaten von unterschiedlichen Landkartendatenherstellern hergestellt wurden. In diesem Fall ist es wahrscheinlich, dass die Straßenkreuzungen für die zum Erstellen des Regelwerks verwendeten Landkartendaten und für die zum Erzeugen der Richtungsanweisung verwendeten Landkartendaten auf unterschiedliche Weise digitalisiert wurden. Mit anderen Worten wurden dieselben Straßenkreuzungen auf unterschiedliche Weise auf die jeweiligen Landkartendaten abgebildet. Beispielsweise wurden die Straßenkreuzungen mit unterschiedlicher Genauigkeit digitalisiert oder einander entsprechenden Straßensegmenten wurden unterschiedliche Ränge zugewiesen.

Derartige Probleme können auch dann auftreten, wenn die zum Erstellen des Regelwerks verwendeten Landkartendaten und die zum Erzeugen der Richtungsanweisung verwendeten Landkartendaten zu unterschiedlichen geografischen Gebieten gehören, zu unterschiedlichen Straßennetzen gehören oder unterschiedliche Versionsnummern aufweisen.

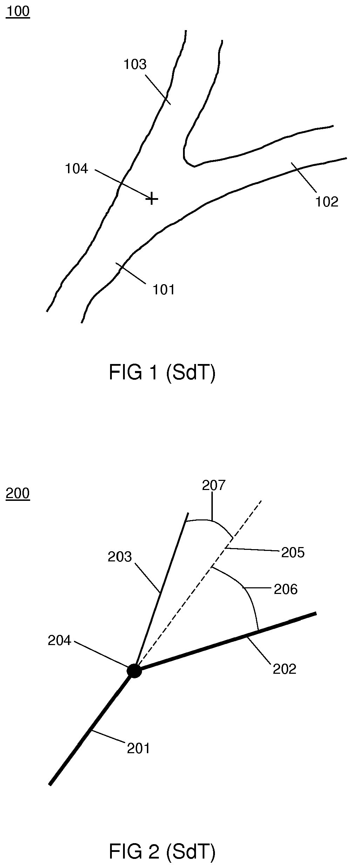

Im Folgenden wird ein solcher Fall, in dem eine Richtungsanweisung für den Benutzer nicht klar verständlich ist, Bezug nehmend auf die Figuren 1 und 2 beispielhaft geschildert.

**Figur 1** zeigt eine Draufsicht auf eine Straßenkreuzung 100, welche drei Straßenabschnitte 101, 102, 103 aufweist, die an einem Punkt 104 zusammentreffen. Die Breite des ersten Straßenabschnitts 101, die Breite des zweiten Straßenabschnitts 102 und die Breite des dritten Straßenabschnitts 103 stimmen nahezu überein.

**Figur 2** zeigt eine symbolhafte Darstellung 200 der Straßenkreuzung 100 aus Figur 1 in Form von Landkartendaten. Die Straßenabschnitte 101, 102, 103 werden von den Straßensegmenten 201, 202, 203 repräsentiert, welche an einem Knotenpunkt 204 zusammentreffen. Zusätzlich ist eine gedachte gerade Verlängerung 205 des ersten Straßensegments 201 dargestellt, welche als Bezugsgerade für Abbiegewinkel dient. Das erste Straßensegment 201 und das zweite Straßensegment 202 haben jeweils den Rang einer Hauptstraße. Demgegenüber hat das dritte Straßensegment 203 einen unbedeutenden Rang, und zwar den Rang eines Feldwegs.

Bei dem ersten Straßensegment 201 handelt es sich um das Eingangssegment der Straßenkreuzung. Das heißt, das Straßensegment 201 repräsentiert den Straßenabschnitt 101, auf dem der Benutzer gemäß einem Routenverlauf zu der Straßenkreuzung geführt werden soll. Ferner handelt es sich bei dem zweiten Straßensegment 202 um das Ausgangssegment der Straßenkreuzung. Das heißt, das Straßensegment 202 repräsentiert den Straßenabschnitt 102, auf dem der Benutzer die Straßenkreuzung gemäß Routenverlauf verlassen soll.

Ferner lässt sich aus den Landkartendaten der Abbiegewinkel 206 des zweiten Straßensegments 202 entnehmen, den das zweite Straßensegment 202 mit der geraden Verlängerung 205 des Eingangssegments 201 bildet. Dieser Abbiegewinkel 206 beträgt 14,5 Grad.

Weiterhin lässt sich aus den Landkartendaten der Abbiegewinkel 207 des dritten Straßensegments 203 entnehmen, den das dritte Straßensegment 203 mit der geraden Verlängerung 205 des Eingangssegments 201 bildet. Dieser Abbiegewinkel 207 beträgt 7 Grad.

Zum Erzeugen einer Richtungsanweisung wird zunächst jedes der Straßensegmente 201, 202, 203 mit einem Regelwerk einem Abbiegesektor zugeordnet. Gemäß der obigen Regel d) wird das Straßensegment 202 (Ausgangssegment) dem Abbiegesektor "geradeaus" zugeordnet. Ferner wird das Straßensegment 203 gemäß der obigen Regel h) dem Abbiegesektor "leicht links" zugeordnet.

Da folglich das Ausgangssegment im Abbiegesektor "geradeaus" liegt, wird auf das Ausgeben einer akustischen Richtungsanweisung verzichtet. Das heißt, wenn der Benutzer sich auf dem ersten Straßenabschnitt 101 nähert, wird keine akustische Richtungsanweisung ausgegeben, was vom Benutzer als Aufforderung verstanden wird, seinen Weg geradeaus fortzusetzen.

Allerdings betrachtet der Benutzer anstelle des zweiten Straßenabschnitts 102 den dritten Straßenabschnitt 103 als "geradeaus". Das ist darauf zurückzuführen, dass der Abbiegewinkel 207 des dritten Straßensegments 203 kleiner als der Abbiegewinkel 206 des zweiten Straßensegments 202 ist und dass die beiden Straßenabschnitte 102, 103 die gleiche Breite aufweisen. Deshalb ist für den Benutzer nicht erkennbar, dass der Rang des dritten Straßenabschnitts 103 kleiner als der Rang des zweiten Straßenabschnitts 102 ist. Vielmehr geht der Benutzer aufgrund der übereinstimmenden Breite beider Straßenabschnitte 102, 103 davon aus, dass sie gleichrangig sind.

Somit ist die Richtungsanweisung "geradeaus", welche mit der fehlenden akustischen Ausgabe assoziiert wird, für den Benutzer nicht klar verständlich. Das liegt daran, dass der Benutzer das zweite Straßensegment 202 nicht als "geradeaus" ansieht. Mit anderen Worten entspricht die Zuordnung des zweiten Straßensegments 202 zum Abbiegesektor "geradeaus" nicht der subjektiven Wahrnehmung des Benutzers. Das führt dazu, dass der Benutzer seinen Weg auf dem dritten Straßenabschnitt 103 fortsetzt, wodurch er von der Route abkommt.

Wäre stattdessen (unter Verwendung eines anderen Regelwerks) die Richtungsanweisung "an der Abzweigung rechts halten" an den Benutzer ausgegeben worden, wäre der Benutzer der Route weiter gefolgt. Das liegt daran, dass die der Richtungsanweisung zugrunde liegende Zuordnung des zweiten Straßenabschnitts zum Abbiegesektor "leicht rechts" der subjektiven Wahrnehmung des Benutzers entspräche.

Somit besteht die Aufgabe der vorliegenden Erfindung darin, derartige Probleme zu lösen und ein Verfahren zum Ausgeben einer Richtungsanweisung mit einer Navigationseinrichtung bereitzustellen, bei dem eine an einen Benutzer der Navigationseinrichtung ausgegebene Richtungsanweisung stets klar verständlich ist, so dass der Benutzer einer Route, auf der die Richtungsanweisung basiert, problemlos folgen kann.

Die Aufgabe wird mit einem Verfahren zum Ausgeben einer Richtungsanweisung mit einer Navigationseinrichtung gemäß Anspruch 1 gelöst. Die Navigationseinrichtung weist Landkartendaten auf, die eine Mehrzahl von Straßenkreuzungen repräsentieren.

Bei dem Verfahren werden die folgenden Schritte ausgeführt:
Erstellen eines optimierten Regelwerks für das Erzeugen einer Richtungsanweisung, indem mehrere Straßenkreuzungen aus der Mehrzahl von Straßenkreuzungen ausgewählt werden, jeder der ausgewählten Straßenkreuzungen eine Soll-Richtungsangabe zugeordnet wird und ein Optimierungsverfahren ausgeführt wird, bei dem die Soll-Richtungsangaben und diejenigen Landkartendaten, welche die ausgewählten Straßenkreuzungen repräsentieren, berücksichtigt werden,
Bestimmen einer Route,
Auswählen einer Straßenkreuzung, welche von der Route passiert wird, aus der Mehrzahl von Straßenkreuzungen,
Bestimmen eines Eingangssegments und eines Ausgangssegments der Straßenkreuzung anhand der Route,
Erzeugen einer Richtungsangabe für die Straßenkreuzung unter Verwendung des optimierten Regelwerks, wobei das Eingangssegment, das Ausgangssegment und diejenigen Landkartendaten, welche die Straßenkreuzung repräsentieren, berücksichtigt werden,
Erzeugen einer Richtungsanweisung für die Straßenkreuzung basierend auf der Richtungsangabe und
Ausgeben der Richtungsanweisung an einen Benutzer der Navigationseinrichtung.

Folglich wird die Richtungsangabe für die Straßenkreuzung mit einem Regelwerk erzeugt, das unter Verwendung von Landkartendaten erstellt wurde, welche unter anderem die Straßenkreuzung repräsentieren. Dadurch wird das Regelwerk an die Art der Landkartendaten der Straßenkreuzung angepasst. Mit anderen Worten wird das Regelwerk auf die Art abgestimmt, in der die Straßenkreuzung digitalisiert beziehungsweise auf die Landkartendaten abgebildet wurde. Damit können beispielsweise auf die Besonderheiten unterschiedlicher Landkartendatenhersteller berücksichtigt werden.

Ferner ermöglicht das eingesetzte Optimierungsverfahren, ein besonders komplexes (optimiertes) Regelwerk zu erstellen, mit dem eine vergleichsweise große Anzahl von Attributen der Straßenkreuzung verarbeitbar ist. Mit einem solchen Regelwerk lassen sich beim Erzeugen der Richtungsangabe die tatsächlichen Verhältnisse an der Straßenkreuzung weitgehend berücksichtigen.

Weiterhin erlaubt das Berücksichtigen der Soll-Richtungsangaben beim Erstellen des Regelwerks das Einfließen subjektiver Wahrnehmungen in das Regelwerk. Zu diesem Zweck können die Soll-Richtungsangaben von Menschen erzeugt werden, beispielsweise indem diese die ausgewählten Straßenkreuzungen in der Realität betrachten.

Die Anpassung des Regelwerks an die Landkartendaten der Straßenkreuzung, die weitgehende Berücksichtigung der tatsächlichen Verhältnisse an der Straßenkreuzung und das Einfließen subjektiver Wahrnehmungen in das Regelwerk bewirken, dass die mit dem Regelwerk erstellte Richtungsangabe der subjektiven Wahrnehmung des Benutzers entspricht. Dadurch ist die auf Basis der Richtungsangabe erzeugte Richtungsanweisung für den Benutzer klar verständlich, sodass der Benutzer der Route problemlos folgen kann.

Die Aufgabe wird ferner mit einer Navigationseinrichtung gemäß Anspruch 8 gelöst, welche die folgenden Bestandteile aufweist:
eine Speichereinheit, in der Landkartendaten, die eine Mehrzahl von Straßenkreuzungen repräsentieren, und ein optimiertes Regelwerk für das Erzeugen einer Richtungsanweisung gespeichert sind, wobei das optimierte Regelwerk erstellt wurde, indem mehrere Straßenkreuzungen aus der Mehrzahl von Straßenkreuzungen ausgewählt wurden, jeder der ausgewählten Straßenkreuzungen eine Soll-Richtungsangabe zugeordnet wurde und ein Optimierungsverfahren ausgeführt wurde, wobei die Soll-Richtungsangaben und diejenigen Landkartendaten, welche die ausgewählten Straßenkreuzungen repräsentieren, berücksichtigt wurden,
eine Recheneinheit, die zum Bestimmen einer Route, Auswählen einer Straßenkreuzung, welche von der Route passiert wird, aus der Mehrzahl von Straßenkreuzungen, Bestimmen eines Eingangssegments und eines Ausgangssegments der Straßenkreuzung anhand der Route, Erzeugen einer Richtungsangabe für die Straßenkreuzung unter Verwendung des optimierten Regelwerks, wobei das Eingangssegment, das Ausgangssegment und diejenigen Landkartendaten, welche die Straßenkreuzung repräsentieren, berücksichtigt werden, und Erzeugen einer Richtungsanweisung für die Straßenkreuzung basierend auf der Richtungsangabe, eingerichtet ist, und
eine Ausgabeeinheit, die zum Ausgeben der Richtungsanweisung an einen Benutzer der Navigationseinrichtung eingerichtet ist.

Weitere Ausführungsformen der Erfindung sind in den abhängigen Patentansprüchen offenbart. Die Erfindung wird nun Bezug nehmend auf die folgenden Figuren näher erläutert:
Figur 1 zeigt eine Draufsicht auf eine Straßenkreuzung.
Figur 2 zeigt eine symbolhafte Darstellung der Straßenkreuzung aus Figur 1.
Figur 3 zeigt eine erste Ausführungsform der Navigationseinrichtung gemäß der Erfindung in Form eines Blockschemas.
Figur 4 zeigt eine erste Ausführungsform des erfindungsgemäßen Verfahrens in Form eines Ablaufschemas.
Figur 5 zeigt eine zweite Ausführungsform der Navigationseinrichtung gemäß der Erfindung in Form eines Blockschemas.
Figur 6 zeigt eine zweite Ausführungsform des erfindungsgemäßen Verfahrens in Form eines Ablaufschemas.

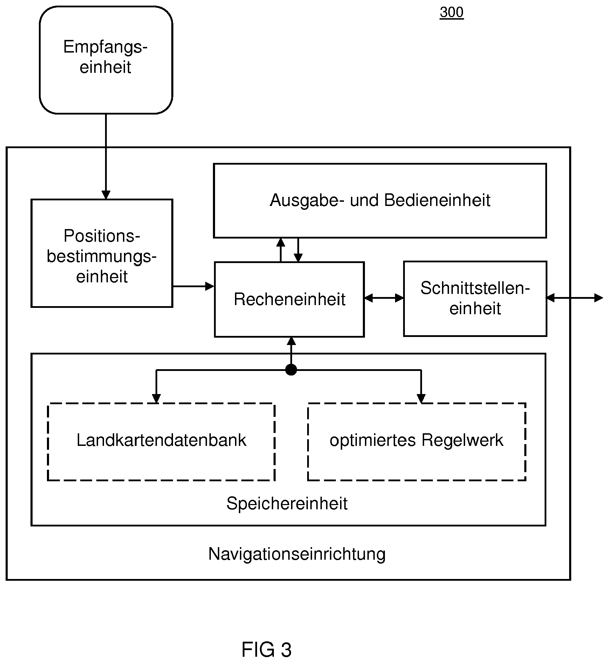

Im Folgenden wird die Erfindung Bezug nehmend auf **Figur 3** näher beschrieben, welche eine erste Ausführungsform der Navigationseinrichtung gemäß der Erfindung in Form eines Blockschemas zeigt.

Die Navigationseinrichtung 300 ist in einem Fahrzeug fest eingebaut. Alternativ dazu kann die Navigationseinrichtung auch als tragbares Gerät in einem Fahrzeug mitgeführt werden oder von einem Benutzer, der ohne Fahrzeug unterwegs ist, getragen werden.

Die Navigationseinrichtung 300 verfügt über eine Empfangseinheit, eine Positionsbestimmungseinheit, eine Ausgabe- und Bedieneinheit, eine Schnittstelleneinheit, eine Recheneinheit und eine Speichereinheit.

Bei der Positionsbestimmungseinheit handelt es sich um einen GPS-Empfänger, der mit der Empfangseinheit verbunden ist, welche in Form einer GPS-Antenne vorliegt. Die Positionsbestimmungseinheit kann Positionskoordinaten, welche eine geografische Position der Navigationseinrichtung 300 repräsentieren, aus Satellitensignalen gewinnen, welche mittels der Empfangseinheit empfangen werden, und die Positionskoordinaten an die Recheneinheit übermitteln.

Bei einer anderen Ausführungsform der Erfindung wird anstelle des GPS-Empfängers eine andere Art von Positionsbestimmungseinheit verwendet, beispielsweise ein GALILEO-Empfänger oder ein GLONASS-Empfänger, der mit einer passenden Empfangseinheit ausgestattet ist.

Die Ausgabe- und Bedieneinheit weist einen Berührungsbildschirm, ein Tastenfeld, eine Sprachausgabeeinrichtung mit einem Lautsprecher und eine Spracheingabeeinrichtung mit einem Mikrofon auf. Die Ausgabe- und Bedieneinheit dient unter anderem zum Ausgeben von Umgebungsinformationen, Routeninformationen und Fahranweisungen an einen Benutzer der Navigationseinrichtung 300 und zum Eingeben von Bedienbefehlen und Zielen durch den Benutzer.

Insbesondere ist die Ausgabe- und Bedieneinheit zum Ausgeben von Richtungsanweisungen an den Benutzer bei einer Zielführung eingerichtet.

Die Speichereinheit verfügt über einen nichtflüchtigen Speicher in Form eines EEPROMs (Electrically Erasable Programmable Read-Only Memory). Alternativ dazu kann die Speichereinheit auch einen anderen Speicher aufweisen, beispielsweise einen Flash-EEPROM oder eine Festplatte. Ferner kann die Speichereinheit über mehrere der genannten Speicher verfügen.

In der Speichereinheit ist eine Landkartendatenbank gespeichert, welche eine Vielzahl von Landkartendaten enthält. Die Landkartendaten repräsentieren Objekte, die sich in einem bestimmten geografischen Gebiet befinden. Zu den Objekten zählen Straßen, Wege, Plätze, Eisenbahnlinien, Flüsse, Gebäude, Brücken, Geländeformen, Landesgrenzen, Parkmöglichkeiten, Raststätten, Verkehrsregelungen und Ortschaften.

Insbesondere repräsentieren die Landkartendaten eine Mehrzahl von Straßenkreuzungen. Diese Straßenkreuzungen sind durch etwa 400 Parameter gekennzeichnet, die in den Landkartendaten vorliegen. Alternativ dazu können die Straßenkreuzungen aber auch durch eine andere Anzahl von Parametern gekennzeichnet sein, beispielsweise durch eine beliebige Anzahl im Bereich von etwa 100 bis etwa 1000.

Neben den Landkartendaten lässt sich in der Speichereinheit ein optimiertes Regelwerk speichern, welches zum Erzeugen einer Richtungsangabe für eine Straßenkreuzung anhand einer Route und von Landkartendaten, welche die Straßenkreuzung repräsentieren, dient. Das optimierte Regelwerk weist diverse Regeln und Parameterschwellenwerte auf, die das Berücksichtigen von Attributen der Straßenkreuzung beim Erzeugen der Richtungsangabe erlauben. Das optimierte Regelwerk hat die Form eines Rechenalgorithmus, der als Software realisiert ist. Die Parameterschwellenwerte sind in einem Parametersatz zusammengefasst, welcher als Parameterdatei vorliegt.

Zum Erstellen des Regelwerks werden die in der Landkartendatenbank gespeicherten Landkartendaten verwendet. Das heißt, die zum Erstellen des Regelwerks verwendeten Landkartendaten und die in der Landkartendatenbank gespeicherten Landkartendaten gehören zu demselben geografischen Gebiet, wurden von demselben Landkartendatenhersteller hergestellt und weisen dieselbe Versionsnummer auf.

Bei einer anderen Ausführungsform der Erfindung gehören die genannten Landkartendaten zu demselben geografischen Gebiet, wurden aber von unterschiedlichen Landkartendatenherstellern erstellt und/oder weisen verschiedene Versionsnummern auf.

Bei einer weiteren Ausführungsform der Erfindung gehören die genannten Landkartendaten zu verschiedenen geografischen Gebieten, wurden aber von demselben Landkartendatenhersteller erstellt und/oder weisen dieselbe Versionsnummer auf.

Die Recheneinheit ist die zentrale Steuerungseinheit der Navigationseinrichtung 300. Sie verfügt neben einem Prozessor (CPU, Central Processing Unit) über einen Arbeitsspeicher (RAM, Random Access Memory), der zum flüchtigen Speichern von Variablen und Zwischenergebnissen dient. Der Prozessor und der Arbeitsspeicher sind auf einem integrierten Schaltkreis vereinigt. Alternativ dazu können der Prozessor und der Arbeitsspeicher separat voneinander angeordnet sein, beispielsweise auf unterschiedlichen integrierten Schaltkreisen.

Die Recheneinheit ist unter anderem zum Bestimmen einer Route, die von einer Startposition, beispielsweise einer aktuellen Position der Navigationseinrichtung, zu einer Zielposition führt, in der Lage. Ferner lässt sich mit der Recheneinheit eine Straßenkreuzung, welche von einer Route passiert wird, aus einer Mehrzahl von Straßenkreuzungen auswählen, die von Landkartendaten repräsentiert werden, welche in der Speichereinheit gespeichert sind.

Weiterhin ist die Recheneinheit dazu eingerichtet, anhand einer Route ein Eingangssegment und ein Ausgangssegment einer Straßenkreuzung, die von der Route passiert wird, zu bestimmen.

Außerdem kann die Recheneinheit eine Richtungsangabe für eine Straßenkreuzung erzeugen. Dafür verwendet die Recheneinheit ein optimiertes Regelwerk und berücksichtigt Landkartendaten, welche die Straßenkreuzung repräsentieren, ein Eingangssegment der Straßenkreuzung und ein Ausgangssegment der Straßenkreuzung.

Ferner lässt sich mit der Recheneinheit auf Basis einer Richtungsangabe eine Richtungsanweisung erzeugen.

Die Recheneinheit ist mit einer Schnittstelleneinheit verbunden, welche unter anderem zum Übertragen von Landkartendaten von außerhalb der Navigationseinrichtung in die Speichereinheit verwendbar ist. Daneben kann über die Schnittstelleneinheit ein optimiertes Regelwerk von außerhalb der Navigationseinrichtung in die Speichereinheit übertragen werden.
Dafür werden die Landkartendaten und/oder das optimierte Regelwerk aus einem externen Gerät über eine drahtgebundene Datenverbindung oder eine drahtlose Datenverbindung in die Speichereinheit übertragen.

Alternativ dazu können die Landkartendaten und/oder das optimierte Regelwerk von einem Speichermedium, beispielsweise von einer Speicherkarte, in die Speichereinheit übertragen werden, indem das Speichermedium mit der Navigationseinrichtung verbunden wird, beispielsweise, indem das Speichermedium in die Navigationseinrichtung eingesteckt wird.

Als weitere Alternative können die Landkartendaten und/oder das optimierte Regelwerk mit einer Empfangseinheit (nicht gezeigt) der Navigationseinrichtung empfangen werden, beispielsweise über ein Mobilfunknetz oder über Rundfunk, und dann in die Speichereinheit übertragen werden. Beispielsweise können Landkartendaten empfangen werden, die zu einer Umgebung der Navigationseinrichtung gehören, wobei zusätzlich ein optimiertes Regelwerk empfangen wird, das unter Verwendung dieser Landkartendaten erzeugt wurde.

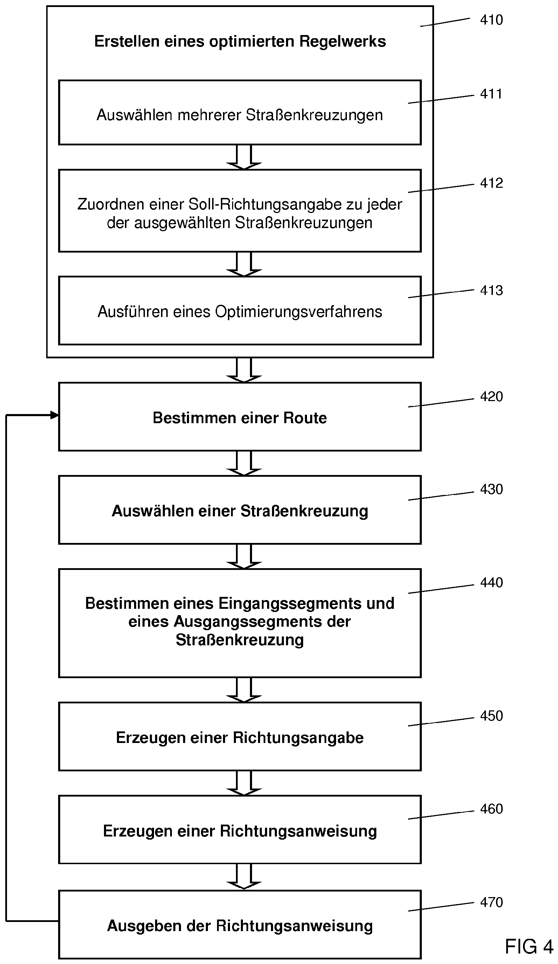

Im Folgenden wird die Erfindung unter zusätzlicher Bezugnahme auf **Figur 4** näher beschrieben, welche eine erste Ausführungsform des erfindungsgemäßen Verfahrens in Form eines Ablaufschemas zeigt. Das Verfahren wird unter Verwendung der in Figur 3 dargestellten Navigationseinrichtung 300 ausgeführt.

Bei einem ersten Verfahrensschritt 410 wird ein optimiertes Regelwerk für das Erzeugen einer Richtungsanweisung erstellt.

Dazu werden bei einem ersten Teilschritt 411 etwa 1000 Straßenkreuzungen aus der Mehrzahl von Straßenkreuzungen ausgewählt. Das heißt, es wird eine Stichprobe von den Straßenkreuzungen genommen. Alternativ dazu kann eine andere Anzahl von Straßenkreuzungen ausgewählt werden, beispielsweise eine beliebige Anzahl im Bereich von etwa 100 bis etwa 5000. Auswahlkriterium ist das Zufallsprinzip.

Bei einer anderen Ausführungsform der Erfindung werden die Straßenkreuzungen nach einem anderen Auswahlkriterium ausgewählt, beispielsweise danach, mit welchem Aufwand sich eine Soll-Richtungsangabe zu einer der Straßenkreuzungen beschaffen lässt. Bei dem Aufwand handelt es sich beispielsweise um eine Zeitdauer, die zum Erreichen einer Straßenkreuzung erforderlich ist.

Bei einer weiteren Ausführungsform der Erfindung werden die Straßenkreuzungen nach dem folgenden Auswahlkriterium ausgewählt: An jeder dieser Straßenkreuzungen ist in der Vergangenheit ein Benutzer einer Navigationseinrichtung von einer Route abgewichen, nachdem an ihn eine Richtungsanweisung ausgegeben wurde, welche basierend auf der Route erzeugt wurde. Optional lässt sich dieses Auswahlkriterium dahingehend erweitern, dass die Richtungsanweisung unter Verwendung der Landkartendaten erzeugt wurde, die in der Speichereinheit der Navigationseinrichtung 300 gespeichert sind, dass die Richtungsanweisung unter Verwendung eines Ausgangsregelwerks erzeugt wurde, welches in das unten erläuterte Optimierungsverfahren eingeht, und/oder dass der Benutzer gegen seinen Willen von der Route abgewichen ist.

Bei noch einer weiteren Ausführungsform der Erfindung werden die Straßenkreuzungen nach verschiedenen Kriterien ausgewählt, beispielsweise nach mehreren der oben genannten Kriterien.

Bei einem zweiten Teilschritt 412 wird jeder der ausgewählten Straßenkreuzungen eine Soll-Richtungsangabe zugeordnet. Unter einer solchen Soll-Richtungsangabe wird eine Richtungsangabe verstanden, die ein Mensch ausgehend von einem Eingangssegment der Straßenkreuzung für ein Ausgangssegment der Straßenkreuzung aufgrund seiner subjektiven Wahrnehmung erwartet. Das heißt, die Soll-Richtungsangabe ist eine Art von Erwartungswert für eine Richtungsangabe, die mit dem optimierten Regelwerk erzeugt werden soll.

Die Soll-Richtungsangabe wird erstellt, indem ein menschlicher Beobachter, welcher sich auf einem der Straßenabschnitte einer ausgewählten Straßenkreuzung befindet, die Straßenkreuzung betrachtet. Aufgrund seiner subjektiven Wahrnehmung ordnet der Beobachter einem der anderen Straßenabschnitte der Straßenkreuzung eine Richtungsangabe zu, beispielsweise "geradeaus", "leicht rechts", "rechts", "scharf rechts", "wenden", "scharf links", "links" oder "leicht links".

Das Straßensegment der Straßenkreuzung, welches den Straßenabschnitt repräsentiert, auf dem sich der Beobachter befindet, gilt als Eingangssegment. Analog dazu gilt das Straßensegment, welches den Straßenabschnitt repräsentiert, dem der Beobachter die Richtungsangabe zuordnet, als Ausgangssegment. Folglich wird die Richtungsangabe der Straßenkreuzung, insbesondere der Kombination aus dem Eingangssegment und dem Ausgangssegment, als Soll-Richtungsangabe zugeordnet.

Bei einer anderen Ausführungsform der Erfindung ordnet der Beobachter mehreren oder jedem der anderen Straßenabschnitte der ausgewählten Straßenkreuzung eine Richtungsangabe zu, wobei auf die oben beschriebene Weise vorgegangen wird. Dadurch werden der Straßenkreuzung mehrere Soll-Richtungsangaben zugeordnet, die sich jeweils auf ein anderes Ausgangssegment, aber auf dasselbe Eingangssegment, beziehen.

Bei einer weiteren Ausführungsform der Erfindung betrachtet der Beobachter die Straßenkreuzung von mehreren oder von jedem der Straßenabschnitte der Straßenkreuzung aus, also aus mehreren Perspektiven. Für jede der Perspektiven ordnet der Beobachter einem, mehreren, oder jedem der jeweils anderen Straßenabschnitte eine Richtungsangabe zu, wobei auf die oben beschriebene Weise vorgegangen wird. Dadurch kann der Straßenkreuzung eine noch größere Anzahl von Soll-Richtungsangaben zugeordnet werden als bei der vorherigen Ausführungsform der Erfindung.

Bei noch einer weiteren Ausführungsform der Erfindung betrachtet der Beobachter die Straßenkreuzung nicht in der Realität, sondern auf einem Bild, beispielsweise auf einer Fotografie. Bei dem Bild kann es sich um eine Frontalansicht der Straßenkreuzung von einem der zugehörigen Straßenabschnitte aus oder um eine Draufsicht auf die Straßenkreuzung handeln, beispielsweise um eine Satellitenaufnahme. Optional kann der Beobachter die Straßenkreuzung auf mehreren Bildern betrachten, beispielsweise auf mehreren Frontansichten, auf mehreren Draufsichten oder auf mehreren Bildern, zu denen neben einer Frontansicht auch eine Draufsicht zählt.

Bei noch einer weiteren Ausführungsform der Erfindung betrachtet der Beobachter die Straßenkreuzung auf einer Landkarte, beispielsweise auf einer topografischen Landkarte oder auf einem Stadtplan, um die Soll-Richtungsangabe zu erzeugen. Bei der Landkarte kann es sich um eine gedruckte Landkarte oder um eine Landkarte handeln, die auf einem Bildschirm angezeigt wird.

Bei noch einer weiteren Ausführungsform der Erfindung werden die ausgewählten Straßenkreuzungen von verschiedenen menschlichen Beobachtern betrachtet, um die Soll-Richtungsangaben zu erzeugen. Somit werden die Soll-Richtungsangaben von mehreren Probanden bereitgestellt.

Im vorliegenden Fall ordnet der Beobachter eine Richtungsangabe einer ausgewählten Straßenkreuzung zu, indem er eine entsprechende Eingabe in einen Computer vornimmt, der von der Navigationseinrichtung 300 separiert ist. Der Computer wird beispielsweise in dem Fahrzeug mitgeführt. Die Eingabe erfolgt manuell, kann aber auch als Spracheingabe erfolgen.

Die Eingabe bewirkt, dass die Soll-Richtungsangabe in einem Datensatz in einer Soll-Richtungsangaben-Datenbank abgelegt wird, die in einer Speichereinrichtung des Computers gespeichert ist. Der Datensatz weist neben der Soll-Richtungsangabe ein Eingangssegment der Straßenkreuzung und ein Ausgangssegment der Straßenkreuzung auf, der die Soll-Richtungsangabe zugeordnet ist.

Der Beobachter gibt für jede der ausgewählten Straßenkreuzungen eine Soll-Richtungsangabe in den Computer ein, wobei jedes Mal ein Datensatz der beschriebenen Art in der Soll-Richtungsangaben-Datenbank gespeichert wird.

Bei einem dritten Teilschritt 413 wird unter Verwendung einer Recheneinrichtung des Computers ein Optimierungsverfahren ausgeführt, das die Soll-Richtungsangaben und diejenigen Landkartendaten, welche die ausgewählten Straßenkreuzungen repräsentieren, berücksichtigt.

Bei dem Optimierungsverfahren handelt es sich um einen evolutionären Algorithmus, also um ein stochastisches, metaheuristisches Optimierungsverfahren, dessen Funktionsweise von der Evolution natürlicher Lebewesen inspiriert ist. Der evolutionäre Algorithmus wird von der Recheneinrichtung automatisch ausgeführt.

Für das Optimierungsverfahren werden mehrere Regelwerke verwendet, die auch als "Ausgangsregelwerke" bezeichnet werden und in einer Ausgangsregelwerk-Datenbank in der Speichereinrichtung des Computers gespeichert sind. Jedes der Ausgangsregelwerke ist derart ausgebildet, dass damit eine Richtungsanweisung für eine Straßenkreuzung unter Berücksichtigung eines Eingangssegments und eines Ausgangssegments der Straßenkreuzung, und derjenigen Landkartendaten, welche die Straßenkreuzung repräsentieren, erzeugbar ist. Dafür weist jedes der Ausgangsregelwerke mehrere Regeln und einen Parametersatz auf, der auch als "Ausgangsparametersatz" bezeichnet werden kann.

Die Ausgangsregelwerke stimmen in ihren Regeln überein, unterscheiden sich aber in ihren Parameterschwellenwerten. Das heißt, die Ausgangsregelwerke weisen unterschiedliche Ausgangsparametersätze auf. Alternativ dazu können sich die Ausgangsregelwerke neben ihren Ausgangsparametersätzen auch in ihren Regeln unterscheiden.

Im vorliegenden Fall werden etwa 7500 Ausgangsregelwerke beziehungsweise Ausgangsparametersätze verwendet. Alternativ dazu kann auch eine andere Anzahl von Ausgangsparametersätzen verwendet werden, beispielsweise eine beliebige Anzahl im Bereich von etwa 7000 bis etwa 8000.

Im vorliegenden Fall werden die Ausgangsparametersätze unter Verwendung der Geneva-Bibliothek erzeugt. Die Ausgangsparametersätze können jedoch auch auf eine andere Art erzeugt werden, beispielsweise indem der evolutionäre Algorithmus für andere Landkartendaten als die in der Speichereinheit gespeicherten Landkartendaten ausgeführt wird. Ferner lassen sich die Ausgangsparametersätze auch manuell erzeugen, beispielsweise auf der Basis menschlicher Erfahrungen.

Bei dem hier verwendeten Optimierungsverfahren werden folgende Schritte a) bis e) ausgeführt:

### a) Bestimmen eines Fitnesswerts für jedes der Ausgangsregelwerke beziehungsweise für jeden der zugehörigen Ausgangsparametersätze.

Dazu wird mit jedem der Ausgangsregelwerke zu jeder der Soll-Richtungsangaben eine korrespondierende Richtungsangabe erzeugt. Die korrespondierende Richtungsangabe ist derselben Straßenkreuzung, demselben Eingangssegment und demselben Ausgangssegment wie die Soll-Richtungsangabe zugeordnet. Ferner wird für jede der Soll-Richtungsangaben eine Abweichung von der korrespondierenden Richtungsangabe ermittelt. Weiterhin wird aus den Abweichungen aller Soll-Richtungsangaben zu den korrespondierenden Richtungsangaben mit einer Fitnessfunktion der Fitnesswert für das Ausgangsregelwerk bestimmt.

Der Fitnesswert repräsentiert die Übereinstimmung der Soll-Richtungsangaben mit den korrespondierenden Richtungsangaben. Je größer der Fitnesswert ist, umso größer ist die Übereinstimmung der Soll-Richtungsangaben mit den korrespondierenden Richtungsangaben. Damit ist der Fitnesswert ein Maß für die Qualität des Ausgangsregelwerks beziehungsweise für die Fähigkeit des Ausgangsregelwerks, eine Richtungsangabe zu erzeugen, die der subjektiven Wahrnehmung eines Menschen entspricht.

Dadurch ermöglicht der Fitnesswert unter anderem eine automatisierte Qualitätskontrolle des Optimierungsprozesses. Außerdem erlaubt der Fitnesswert, zu erkennen, wie sich eine manuell vorgenommene Parameteränderung auf die Qualität eines Ausgangsregelwerks auswirkt. Solch eine Parameteränderung wird beispielsweise vorgenommen, um einem Optimierungsverfahren einen günstigen Start zu ermöglichen, mit dem ein vorgegebenes Optimierungsziel schnell erreicht wird. Ferner kann solch eine Parameteränderung vorgenommen werden, wenn ein Optimierungsverfahren ein vorgegebenes Ziel ansonsten nicht erreichen würde.

### b) Ermitteln der Ausgangsregelwerke beziehungsweise Ausgangsparametersätze mit den höchsten Fitnesswerten.

Im vorliegenden Fall werden etwa 30 Ausgangsregelwerke ermittelt, welche die höchsten Fitnesswerte unter den vorhandenen Ausgangsregelwerken aufweisen. Alternativ dazu kann auch eine andere Anzahl von Ausgangsregelwerken ermittelt werden, welche die höchsten Fitnesswerte aufweisen, beispielsweise eine beliebige Anzahl im Bereich von etwa 10 bis etwa 100.

### c) Mutieren der ausgewählten Ausgangsregelwerke beziehungsweise Ausgangsparametersätze, sodass mehrere mutierte Regelwerke entstehen.

Im vorliegenden Fall entstehen etwa 7500 mutierte Regelwerke. Das heißt, die Anzahl der mutierten Regelwerke entspricht ungefähr der Anzahl der Ausgangsregelwerke. Alternativ dazu kann eine Anzahl von mutierten Regelwerken entstehen, welche nicht der Anzahl der Ausgangsregelwerke entspricht, beispielsweise eine beliebige Anzahl im Bereich von etwa 7000 bis etwa 8000.

### d) Iteratives Wiederholen der Schritte a) bis c), wobei die beim vorhergehenden Schritt c) entstandenen mutierten Regelwerke als Ausgangsregelwerke verwendet werden.

Im vorliegenden Fall werden die Schritte a) bis c) etwa 250 Mal durchlaufen, wobei die Anzahl der Durchläufe (Iterationen) fest vorgegeben ist. Alternativ dazu kann jedoch auch eine andere Anzahl von Iterationen vorgegeben sein, beispielsweise eine beliebige Anzahl im Bereich von etwa 100 bis etwa 500. Je größer die Anzahl der Iterationen ist, umso höher ist normalerweise die Qualität der erzeugten mutierten Regelwerke, aber auch der Rechenaufwand.

Bei einer anderen Ausführungsform der Erfindung richtet sich die Anzahl der Iterationen nach einem vorgegebenen Zielfitnesswert, also nach einer vorgegebenen Qualität eines mutierten Regelwerks, das bei dem Optimierungsverfahren erzeugt werden soll. Wird dieser Zielfitnesswert von einem der mutierten Regelwerke erreicht oder überschritten, werden die Iterationen beendet.

### e) Bestimmen des mutierten Regelwerks mit dem höchsten Fitnesswert als das optimierte Regelwerk.

Das optimierte Regelwerk weist dieselben Regeln wie die Ausgangsregelwerke auf, unterscheidet sich aber bezüglich seiner Parameterschwellenwerte von jedem der Ausgangsregelwerke. Alternativ dazu kann das Optimierungsverfahren so ausgestaltet sein, dass sich das optimierte Regelwerk neben seinen Parameterschwellenwerten auch in seinen Regeln von den Ausgangsregelwerken unterscheidet.

Das optimierte Regelwerk wird aus der Speichereinrichtung des Computers in ein externes Gerät übertragen. Ferner wird das optimierte Regelwerk aus dem externen Gerät in die Speichereinheit der Navigationseinrichtung 300 übertragen. Dafür kann eine drahtgebundene Datenverbindung oder eine drahtlose Datenverbindung verwendet werden. Das Übertragen des optimierten Regelwerks in die Speichereinheit findet beim Herstellen der Navigationseinrichtung 300 statt.

Alternativ dazu kann das optimierte Regelwerk beim Aktualisieren der Landkartendaten der Navigationseinrichtung in die Speichereinheit übertragen werden. Dabei kann das Regelwerk ein in der Speichereinheit gespeichertes älteres oder fehlerhaftes Regelwerk ersetzen.

Bei einem zweiten Verfahrensschritt 420 wird unter Verwendung der Recheneinheit eine Route bestimmt, die von einer Startposition zu einer Zielposition führt.

Dazu gibt ein Benutzer über die Ausgabe- und Bedieneinheit ein Ziel in die Navigationseinrichtung 300 ein. Anhand des Ziels wird mit der Recheneinheit unter Verwendung der in der Speichereinheit vorliegenden Landkartendaten die Zielposition bestimmt. Alternativ dazu kann die Zielposition anhand historischer Daten bestimmt werden, so dass die Zielposition geschätzt wird. Außerdem wird mit der Positionsbestimmungseinheit eine aktuelle Position der Navigationseinrichtung 300 als Startposition ermittelt. Weiterhin wird mit der Recheneinheit unter Verwendung der Landkartendaten die Route bestimmt, welche von der Startposition zu der Zielposition führt.

Bei einem dritten Verfahrensschritt 430 wird unter Verwendung der Recheneinheit aus der Mehrzahl von Straßenkreuzungen, die von den Landkartendaten der Navigationseinrichtung 300 repräsentiert werden, eine Straßenkreuzung ausgewählt, welche von der Route passiert wird.

Im vorliegenden Fall wird diejenige Straßenkreuzung ausgewählt, welche sich auf der Route als nächste Straßenkreuzung vor der Navigationseinrichtung 300 befindet. Alternativ dazu kann eine beliebige andere Straßenkreuzung ausgewählt werden, die von der Route passiert wird.

Bei einem vierten Verfahrensschritt 440 werden unter Verwendung der Recheneinheit anhand der Route und der Landkartendaten ein Eingangssegment und ein Ausgangssegment der Straßenkreuzung bestimmt.

Das Eingangssegment repräsentiert den Straßenabschnitt der Straßenkreuzung, auf dem der Benutzer gemäß dem Routenverlauf zu der Straßenkreuzung hingeführt werden soll. Das Ausgangssegment repräsentiert den Straßenabschnitt der Straßenkreuzung, auf dem der Benutzer gemäß dem Routenverlauf die Straßenkreuzung verlassen soll.

Bei einem fünften Verfahrensschritt 450 wird mit der Recheneinheit unter Verwendung des optimierten Regelwerks eine Richtungsangabe für die Straßenkreuzung erzeugt, wobei das Eingangssegment, das Ausgangssegment und diejenigen Landkartendaten, welche die Straßenkreuzung repräsentieren, berücksichtigt werden. Zu diesem Zweck liegt das optimierte Regelwerk als Rechenalgorithmus vor, welcher als Software realisiert ist.

Bei einem sechsten Verfahrensschritt 460 wird mit der Recheneinheit basierend auf der Richtungsangabe eine Richtungsanweisung erzeugt, sobald sich die Navigationseinrichtung 300 der Straßenkreuzung nähert. Dabei können neben der Richtungsangabe weitere Informationen in die Richtungsanweisung einfließen, beispielsweise eine Entfernung der Navigationseinrichtung 300 von der Straßenkreuzung.

Bei einem siebenten Verfahrensschritt 470 wird die Richtungsanweisung an den Benutzer der Navigationseinrichtung 300 ausgegeben. Dazu wird die Richtungsanweisung auf dem Bildschirm der Ausgabe- und Bedieneinheit visuell angezeigt. Außerdem wird die Richtungsanweisung über den Lautsprecher der Ausgabe- und Bedieneinheit akustisch wiedergegeben. Der Benutzer kann auf die Richtungsanweisung reagieren, indem er ein der Richtungsanweisung entsprechendes Abbiegemanöver durchführt.

Durch die Anpassung des Regelwerks an die verwendeten Landkartendaten, das umfassende Berücksichtigen der tatsächlichen Verhältnisse an der Straßenkreuzung und die in das Regelwerk eingeflossenen subjektiven Wahrnehmungen entspricht die Richtungsangabe der subjektiven Wahrnehmung des Benutzers. Daher ist die mit dem Regelwerk erzeugte Richtungsanweisung für den Benutzer klar verständlich beziehungsweise nachvollziehbar, sodass der Benutzer der Route problemlos folgen kann.

Während das Fahrzeug die Route befährt, werden die Verfahrensschritte 420 bis 470 erneut durchlaufen, sobald sich das Fahrzeug einer weiteren Straßenkreuzung nähert. Das heißt, die Verfahrensschritte 420 bis 470 werden entlang der Route mehrmals hintereinander ausgeführt.

Bei einer anderen Ausführungsform der Erfindung werden die Verfahrensschritte 420 bis 450, nachdem die Route bestimmt wurde, mehrmals durchlaufen, noch bevor sich das Fahrzeug einer auf der Route angeordneten Straßenkreuzung nähert. Sobald die Route bestimmt wurde, werden nacheinander alle von der Route passierten Straßenkreuzungen ausgewählt, wobei jeweils ein Eingangssegment und ein Ausgangssegment bestimmt werden und eine Richtungsangabe erzeugt wird. Die Richtungsangabe wird derart in der Speichereinheit oder im Arbeitsspeicher der Recheneinheit zwischengespeichert, dass sie mit der Straßenkreuzung verknüpft wird. Erst wenn sich die Navigationseinrichtung der Straßenkreuzung nähert, wird auf Basis der Richtungsangabe eine Richtungsanweisung erzeugt (Verfahrensschritt 460) und ausgegeben (Verfahrensschritt 470).

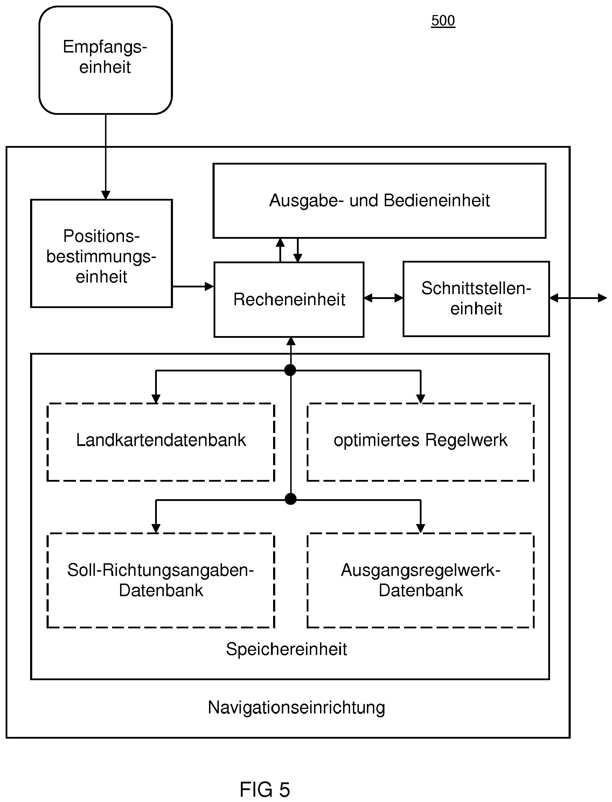

Im Folgenden wird auf **Figur 5** Bezug genommen, welche eine zweite Ausführungsform der Navigationseinrichtung gemäß der Erfindung in Form eines Blockschemas zeigt.

Die Navigationseinrichtung 500 ist in einem Fahrzeug fest eingebaut. Alternativ dazu kann die Navigationseinrichtung auch als tragbares Gerät in einem Fahrzeug mitgeführt werden oder von einem Benutzer, der ohne Fahrzeug unterwegs ist, getragen werden.

Die Funktionsmodule Empfangseinheit, Positionsbestimmungseinheit, Ausgabe- und Bedieneinheit, Schnittstelleneinheit, Speichereinheit und Recheneinheit der Navigationseinrichtung 500 entsprechen im Wesentlichen den Funktionsmodulen Empfangseinheit, Positionsbestimmungseinheit, Ausgabe- und Bedieneinheit, Schnittstelleneinheit, Speichereinheit und Recheneinheit der in Figur 3 gezeigten Navigationseinrichtung 300.

Im Gegensatz zu der Navigationseinrichtung 300 lässt sich mit der Navigationseinrichtung 500 ein optimiertes Regelwerk für das Erzeugen einer Richtungsanweisung erstellen, was den Verzicht auf einen separaten Computer für das Erzeugen des optimierten Regelwerks ermöglicht. Hierfür verfügen die Ausgabe- und Bedieneinheit, die Speichereinheit und die Recheneinheit der Navigationseinrichtung 500 über folgende zusätzliche Funktionen:
Die Ausgabe- und Bedieneinheit der Navigationseinrichtung 500 ist zum Auswählen einer Straßenkreuzung aus einer Mehrzahl von Straßenkreuzungen, die von in der Speichereinheit abgelegten Landkartendaten repräsentiert werden, eingerichtet. Zusätzlich ist die Ausgabe- und Bedieneinheit zum Zuordnen einer Soll-Richtungsangabe zu einer Straßenkreuzung durch einen Benutzer der Navigationseinrichtung 500 eingerichtet.

Ferner ist in der Speichereinheit der Navigationseinrichtung 500 eine Soll-Richtungsangaben-Datenbank gespeichert, welche mehrere Datensätze aufnehmen kann. Die Daten eines solchen Datensatzes repräsentieren neben einer Soll-Richtungsangabe ein Eingangssegment und ein Ausgangssegment der Straßenkreuzung, welcher die Soll-Richtungsangabe zugeordnet ist.

Ein solcher Datensatz wird beim Zuordnen einer Soll-Richtungsangabe zu einer ausgewählten Straßenkreuzung durch den Benutzer gespeichert. Zusätzlich können weitere solcher Datensätze bei der Herstellung der Navigationseinrichtung 500 oder beim Aktualisieren von Landkartendaten der Navigationseinrichtung 500 von außerhalb der Navigationseinrichtung 500 in die Speichereinheit übertragen werden, beispielsweise über die Schnittstelleneinheit.

Außerdem ist in der Speichereinheit der Navigationseinrichtung 500 eine Ausgangsregelwerk-Datenbank gespeichert, welche mehrere Ausgangsregelwerke aufweist. Diese Ausgangsregelwerke entsprechen den Ausgangsregelwerken, die oben Bezug nehmend auf Figur 4 beschrieben wurden.

Weiterhin ist die Recheneinheit der Navigationseinrichtung 500 zum Ausführen eines Optimierungsverfahrens in der Lage, bei dem ein optimiertes Regelwerk erstellt wird. In das Optimierungsverfahren gehen in der Landkartendatenbank gespeicherte Landkartendaten, in der Soll-Richtungsangaben-Datenbank gespeicherte Soll-Richtungsangaben und in der Ausgangsregelwerk-Datenbank gespeicherte Ausgangsregelwerke ein.

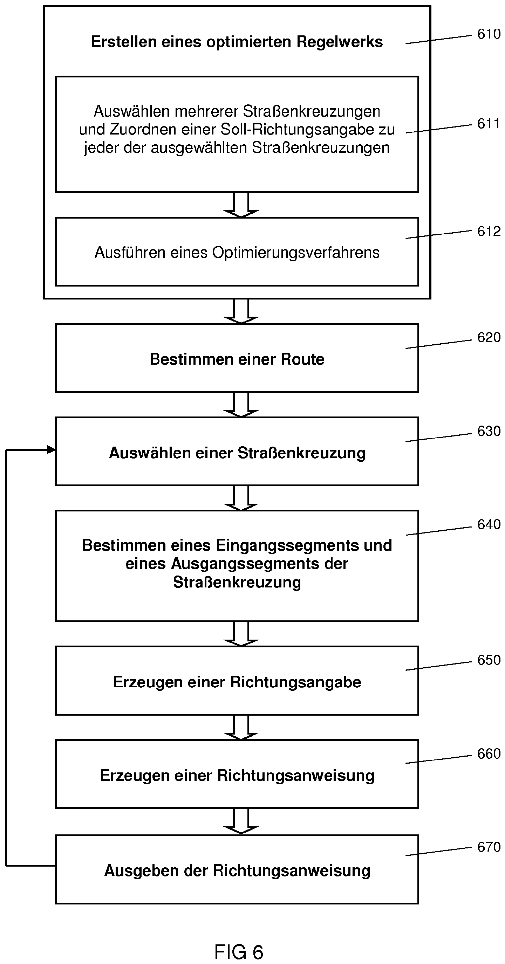

Im Folgenden wird die Erfindung unter zusätzlicher Bezugnahme auf **Figur 6** näher beschrieben, welche eine zweite Ausführungsform des erfindungsgemäßen Verfahrens in Form eines Ablaufschemas zeigt. Das Verfahren wird unter Verwendung der in Figur 5 dargestellten Navigationseinrichtung 500 ausgeführt.

Die zweite Ausführungsform unterscheidet sich von der ersten Ausführungsform des erfindungsgemäßen Verfahrens darin, dass das optimierte Regelwerk nicht mit einem separaten Computer erstellt wird. Stattdessen wird das optimierte Regelwerk mit der Navigationseinrichtung 500 erstellt, welche auch zum Erzeugen einer Richtungsanweisung unter Verwendung des optimierten Regelwerks dient.

Bei einem ersten Verfahrensschritt 610 wird ein optimiertes Regelwerk für das Erzeugen einer Richtungsanweisung erstellt.

Dazu wählt ein Benutzer der Navigationseinrichtung 500 bei einem ersten Teilschritt 611 mehrere Straßenkreuzungen aus der Mehrzahl von Straßenkreuzungen aus und ordnet jeder der ausgewählten Straßenkreuzungen eine Soll-Richtungsangabe zu. Die Auswahl erfolgt nach einem der Auswahlkriterien, die oben Bezug nehmend auf Figur 4 beschrieben wurden. Alternativ dazu kann die Auswahl auch nach mehreren dieser Kriterien erfolgen.

Ferner befährt der Benutzer die ausgewählten Straßenkreuzungen mit dem Fahrzeug und gibt an jeder dieser Straßenkreuzungen eine Soll-Richtungsangabe in die Navigationseinrichtung 500 ein. Dazu werden auf dem Berührungsbildschirm der Ausgabe- und Bedieneinheit mehrere Berührungsflächen angezeigt, die jeweils mit einer der Soll-Richtungsangaben "geradeaus", "leicht rechts", "rechts", "scharf rechts", "wenden", "scharf links", "links" oder "leicht links" beschriftet sind. Berührt der Benutzer an einer Straßenkreuzung eine der Berührungsflächen, wird die jeweilige Soll-Richtungsangabe der Straßenkreuzung zugeordnet. Dadurch wird die Soll-Richtungsangabe in einem Datensatz in der Soll-Richtungsangaben-Datenbank gespeichert.

Bei einer anderen Ausführungsform der Erfindung wird die Soll-Richtungsangabe mittels Sprache in die Navigationseinrichtung eingegeben.

Im vorliegenden Fall wird unter Verwendung der Positionsbestimmungseinheit, der Recheneinheit und von Landkartendaten, die in der Landkartendatenbank enthalten sind, automatisch ermittelt, auf welchem der Straßenabschnitte der ausgewählten Straßenkreuzung das Fahrzeug in die Straßenkreuzung einfährt. Das Straßensegment, welches diesen Straßenabschnitt repräsentiert, wird automatisch als Eingangssegment in dem Datensatz abgelegt.

Außerdem wird unter Verwendung der Positionsbestimmungseinheit, der Recheneinheit und von Landkartendaten, die in der Landkartendatenbank enthalten sind, automatisch ermittelt, auf welchem der Straßenabschnitte der ausgewählten Straßenkreuzung das Fahrzeug die Straßenkreuzung verlässt. Das Straßensegment, welches den Straßenabschnitt repräsentiert, wird automatisch als Ausgangssegment in dem Datensatz abgelegt.

Alternativ dazu legt der Benutzer unter Verwendung der Ausgabe- und Bedieneinheit fest, welches der Straßensegmente der ausgewählten Straßenkreuzung als Ausgangssegment in dem Datensatz gespeichert werden soll. Das hat den Vorteil, dass der Benutzer an einer Straßenkreuzung mehrere Ausgangssegmente festlegen und jedem der Ausgangssegmente eine Soll-Richtungsanweisung zuordnen kann, sodass der Straßenkreuzung mehrere Soll-Richtungsanweisungen zugeordnet werden.

Als Ergebnis weist der Datensatz neben der Soll-Richtungsangabe ein Eingangssegment und ein Ausgangssegment der Straßenkreuzung auf, welcher die Soll-Richtungsangabe zugeordnet ist.

Bei einer anderen Ausführungsform der Erfindung überschreibt der Datensatz in der Soll-Richtungsangaben-Datenbank einen Datensatz derselben Art, welcher bei der Herstellung der Navigationseinrichtung 500 oder beim Aktualisieren von Landkartendaten der Navigationseinrichtung 500 von außerhalb der Navigationseinrichtung 500 in die Soll-Richtungsangaben-Datenbank übertragen wurde. Auf diese Weise lässt sich die Qualität der Soll-Richtungsangaben-Datenbank verbessern. Im Ergebnis sind die in der Speichereinheit gespeicherten Soll-Richtungsangaben dadurch gekennzeichnet, dass zumindest eine der Soll-Richtungsangaben bei der Herstellung der Navigationseinrichtung in der Speichereinheit gespeichert wurde und zumindest eine andere der Soll-Richtungsangaben in der Speichereinheit gespeichert wird, indem die Soll-Richtungsangabe von einem Benutzer der Navigationseinrichtung einer der ausgewählten Straßenkreuzungen zugeordnet wurde.

Sobald eine vorgegebene Anzahl von Soll-Richtungsangaben in die Navigationseinrichtung 500 eingegeben wurde, führt die Recheneinheit der Navigationseinrichtung 500 bei einem zweiten Teilschritt 612 ein Optimierungsverfahren aus. Die vorgegebene Anzahl von Soll-Richtungsangaben beträgt beispielsweise etwa 100. Alternativ dazu wird das Optimierungsverfahren vom Benutzer zu einem Zeitpunkt seiner Wahl unter Verwendung der Ausgabe- und Bedieneinheit gestartet.

Bei dem Optimierungsverfahren handelt es sich um einen evolutionären Algorithmus.

Bei dem Optimierungsverfahren werden die Schritte a) bis e) ausgeführt, welche oben Bezug nehmend auf Figur 4 beschrieben wurden. In das Optimierungsverfahren fließen neben den in der Landkartendatenbank gespeicherten Landkartendaten, welche die ausgewählten Straßenkreuzungen repräsentieren, auch die in der Soll-Richtungsangaben-Datenbank gespeicherten Soll-Richtungsangaben und die in der Ausgangsregelwerk-Datenbank gespeicherten Ausgangsregelwerke ein.

Bei einer anderen Ausführungsform der Erfindung fließen in das Optimierungsverfahren neben Soll-Richtungsangaben, die der Benutzer in die Navigationseinrichtung eingegeben hat, auch Soll-Richtungsangaben ein, die von außerhalb der Navigationseinrichtung 500 in die Soll-Richtungsangaben-Datenbank übertragen wurden. Die Übertragung fand beispielsweise bei der Herstellung der Navigationseinrichtung 500 oder beim Aktualisieren von Landkartendaten der Navigationseinrichtung 500 statt.

Bei dem Optimierungsverfahren wird ein optimiertes Regelwerk erzeugt und unter Verwendung der Recheneinheit in der Speichereinheit abgelegt, wo es für das Erzeugen von Richtungsanweisungen bereitsteht.

Bei einer anderen Ausführungsform der Erfindung überschreibt das optimierte Regelwerk in der Speichereinheit ein anderes Regelwerk, das bei der Herstellung der Navigationseinrichtung 500 oder beim Aktualisieren von Landkartendaten der Navigationseinrichtung 500 von außerhalb der Navigationseinrichtung 500 in die Speichereinheit übertragen wurde. Auf diese Weise lässt sich die Qualität eines in der Speichereinheit vorliegenden Regelwerks verbessern.

Damit ist der erste Verfahrensschritt 610 beendet. Die anderen in Figur 6 gezeigten Verfahrensschritte 620 bis 670 werden analog zu den oben genannten Verfahrensschritten 420 bis 470 ausgeführt.

## Patentansprüche

1. Verfahren zum Ausgeben einer Richtungsanweisung mit einer Navigationseinrichtung (300), welche Landkartendaten aufweist, die eine Mehrzahl von Straßenkreuzungen repräsentieren, mit den folgenden Schritten:
Erstellen eines optimierten Regelwerks zum Zuordnen von Straßensegmenten zu Abbiegerichtungen, indem mehrere Straßenkreuzungen aus der Mehrzahl von Straßenkreuzungen ausgewählt werden, jeder der ausgewählten Straßenkreuzungen eine auf eine Kombination aus einem Ausgangssegment und einem Eingangssegment der Straßenkreuzung bezogene Soll-Richtungsangabe zugeordnet wird, wobei die Soll-Richtungsangaben den ausgewählten Straßenkreuzungen von einem menschlichen Beobachter oder von mehreren menschlichen Beobachtern zugeordnet werden, und ein Optimierungsverfahren ausgeführt wird, das einen evolutionären Algorithmus aufweist, welcher mehrere Ausgangsregelwerke, die Soll-Richtungsangaben und diejenigen Landkartendaten, welche die ausgewählten Straßenkreuzungen repräsentieren, berücksichtigt,
wobei die Ausgangsregelwerke derart ausgebildet sind, dass damit eine Richtungsanweisung für eine Straßenkreuzung unter Berücksichtigung eines Eingangssegments und eines Ausgangssegments der Straßenkreuzung, und derjenigen Landkartendaten, welche die Straßenkreuzung repräsentieren, erzeugbar ist,
wobei das Verfahren zusätzlich die folgenden Schritte aufweist:
Bestimmen einer Route,
Auswählen einer Straßenkreuzung, welche von der Route passiert wird, aus der Mehrzahl von Straßenkreuzungen,
Bestimmen eines Eingangssegments und eines Ausgangssegments der Straßenkreuzung anhand der Route,
Erzeugen einer Richtungsangabe für die Straßenkreuzung unter Verwendung des optimierten Regelwerks, wobei das Eingangssegment, das Ausgangssegment und diejenigen Landkartendaten, welche die Straßenkreuzung repräsentieren, berücksichtigt werden,
Erzeugen einer Richtungsanweisung für die Straßenkreuzung basierend auf der Richtungsangabe und
Ausgeben der Richtungsanweisung an einen Benutzer der Navigationseinrichtung (300).

2. Verfahren gemäß Anspruch 1,
bei dem zum Erstellen des optimierten Regelwerks eine Straßenkreuzung ausgewählt wird, an welcher ein Benutzer einer Navigationseinrichtung von einer Route abgewichen ist, nachdem an den Benutzer eine Richtungsanweisung ausgegeben wurde, welche basierend auf der Route erzeugt wurde.

3. Verfahren gemäß Anspruch 2, wobei die Richtungsanweisung zusätzlich basierend auf den Landkartendaten erzeugt wurde.

4. Verfahren gemäß Anspruch 3, wobei die Richtungsanweisung zusätzlich basierend auf einem Ausgangsregelwerk erzeugt wurde, das bei dem Optimierungsverfahren verwendet wird.

5. Verfahren gemäß einem der vorhergehenden Ansprüche,
bei dem das Optimierungsverfahren von einer Recheneinheit der Navigationseinrichtung (500) ausgeführt wird.

6. Verfahren gemäß Anspruch 5,
bei dem die Soll-Richtungsangaben in einer Speichereinheit der Navigationseinrichtung (500) gespeichert werden.

7. Verfahren gemäß Anspruch 6,
bei dem eine der Soll-Richtungsangaben bei der Herstellung der Navigationseinrichtung (500) in die Speichereinheit übertragen wird und eine andere der Soll-Richtungsangaben in der Speichereinheit gespeichert wird, indem die Soll-Richtungsangabe von einem Benutzer der Navigationseinrichtung (500) einer der ausgewählten Straßenkreuzungen zugeordnet wird.

8. Navigationseinrichtung (500), welche aufweist:
eine Speichereinheit, in der Landkartendaten, die eine Mehrzahl von Straßenkreuzungen repräsentieren, Soll-Richtungsangaben, die jeweils auf eine Kombination aus einem Ausgangssegment und einem Eingangssegment einer ausgewählten Straßenkreuzung der Straßenkreuzungen bezogen sind, mehrere Ausgangsregelwerke und ein optimiertes Regelwerk zum Zuordnen von Straßensegmenten zu Abbiegerichtungen speicherbar sind,
wobei die Ausgangsregelwerke derart ausgebildet sind, dass damit eine Richtungsanweisung für eine Straßenkreuzung unter Berücksichtigung eines Eingangssegments und eines Ausgangssegments der Straßenkreuzung, und derjenigen Landkartendaten, welche die Straßenkreuzung repräsentieren, erzeugbar ist,
wobei die Navigationseinrichtung (500) eine Recheneinheit aufweist, die zum Ausführen eines Optimierungsverfahrens eingerichtet ist, welches einen evolutionären Algorithmus aufweist, der dazu eingerichtet ist, unter Berücksichtigung der Ausgangsregelwerke, der Soll-Richtungsangaben und derjenigen Landkartendaten, welche die ausgewählten Straßenkreuzungen repräsentieren, ein optimiertes Regelwerk zu erstellen,
wobei die Recheneinheit zum Bestimmen einer Route, Auswählen einer Straßenkreuzung, welche von der Route passiert wird, aus der Mehrzahl von Straßenkreuzungen, Bestimmen eines Eingangssegments und eines Ausgangssegments der Straßenkreuzung anhand der Route, Erzeugen einer Richtungsangabe für die Straßenkreuzung unter Verwendung des optimierten Regelwerks, wobei das Eingangssegment, das Ausgangssegment und diejenigen Landkartendaten, welche die Straßenkreuzung repräsentieren, berücksichtigt werden, und Erzeugen einer Richtungsanweisung für die Straßenkreuzung basierend auf der Richtungsangabe eingerichtet ist, und
wobei die Navigationseinrichtung (500) eine Ausgabe- und Bedieneinheit aufweist, die zum Auswählen der ausgewählten Straßenkreuzungen aus der Mehrzahl von Straßenkreuzungen, Zuordnen der Soll-Richtungsangaben zu den ausgewählten Straßenkreuzungen durch einen Benutzer der Navigationseinrichtung (500) und Ausgeben der Richtungsanweisung an einen Benutzer der Navigationseinrichtung (500) eingerichtet ist.

## Claims

1. Method for outputting a direction instruction by a navigation device (300) which comprises map data representing a majority of intersections, the method comprising the following steps:
Preparing an optimised set of rules for assigning road segments to turn directions by selecting several intersections of the majority of intersections, assigning to each of the selected intersections a target direction indication related to a combination of an entry segment and an exit segment of the intersection, whereby the target direction indications are assigned to the selected intersections by a human observer or by several human observers, and performing an optimisation procedure which comprises an evolutionary algorithm considering several initial rules sets, the target direction indications and those map data which represent the selected intersections, whereby the initial rules sets are configured in such a way that with them a direction instruction for an intersection is generable considering an entry segment and an exit segment of the intersection, and those map data which represent the intersection,
whereby the method comprises the following steps in addition:
determining a route,
selecting an intersection which is passed by the route from the majority ty of intersections,
determining an entry segment and an exit segment of the intersection by means of the route,
generating a direction indication for the intersection by using the optimised rules set, whereby the entry segment, the exit segment, and those of the map data which represent the intersection are considered,
generating a direction instruction for the intersection based on the direction indication, and
outputting the direction instruction to a user of the navigation device (300).

2. Method according to claim 1,
whereby for generating the optimised rules set an intersection is selected at which an user of a navigation device has deviated from a route after a direction instruction was output to the user which was generated based on the route.

3. Method according to claim 2,
whereby the direction instruction was generated based in addition on the map data.

4. Method according to claim 3,
whereby the direction instruction was generated based in addition on the initial rules set used for the optimisation procedure.

5. Method according to one of the preceding claims,
whereby the optimisation procedure is performed by a computing unit of the navigation device (500).

6. Method according to claim 5,
whereby the target direction indications are stored in a memory unit of the navigation device (500).

7. Method according to claim 6,
whereby one of the target direction indications is transmit into the memory unit during the production of the navigation device (500) and another of the target direction indications is stored in the memory unit by assigning the target direction indication to one of the selected intersections by a user of the navigation device (500).

8. Navigation device (500) which comprises:
a memory unit in which map data representing a majority of intersections, target direction indications which are each related to a combination of an exit segment and an entry segment of a selected intersection of the intersections, several initial rules sets and an optimized rules set for assigning road segments to turn directions are storable,
whereby the initial rules sets are configured in such a way that that with them a direction instruction for an intersection is generable considering an entry segment and an exit segment of the intersection, and those map data which represent the intersection,
whereby the navigation device (500) comprises a computing unit configured for performing an optimisation procedure which comprises an evolutionary algorithm configured for generating an optimised rules set considering the initial rules sets, the target direction indications and those map data which represent the selected intersections,
whereby the computing unit is configured for determining a route, selecting an intersection which is passed by the route from the majority of intersections, determining an entry segment and an exit segment of the intersection considering the route, generating a direction indication for the intersection by using the optimised rules set, whereby the entry segment, the exit segment, and those map data which represent the intersection are considered, and generating a direction instruction for the intersection based on the direction indication, and
whereby the navigation device (500) comprises an output and operating unit configured for selecting the selected intersections from the majority of intersections, assigning the target direction indications to the selected intersections by a user of the navigation device (500) and outputting the direction instruction to a user of the navigation device (500).

## Revendications

1. Procédé permettant de transmettre une instruction de direction avec un dispositif de navigation (300) comportant des données cartographiques représentant une multitude d'intersections de routes, le procédé étant constitué des étapes suivantes :
création d'un référentiel optimisé servant attribuer des segments de route à des directions de bifurcation, **caractérisé en ce que** plusieurs intersections de routes sont choisies parmi la multitude d'intersections de routes, qu'une indication de consigne de direction basée sur une combinaison d'un segment de sortie et d'un segment d'entrée de l'intersection de routes est affectée à chacune des intersections de routes sélectionnées, ces indications de consigne de direction étant affectées aux intersections de routes choisies par un observateur humain ou par plusieurs observateurs humains, et qu'un procédé d'optimisation est effectué avec un algorithme évolutif prenant en compte plusieurs référentiels de base, les indications de consigne de direction et les données cartographiques représentant les intersections de routes choisies,
les référentiels de base étant configurés de manière à permettre de générer une instruction de direction pour une intersection de routes en fonction d'un segment d'entrée et d'un segment de sortie de l'intersection de routes, et en fonction des données cartographiques représentant l'intersection de routes,
le procédé étant constitué en plus des étapes suivantes :
détermination d'un itinéraire,
choix d'une intersection de routes par laquelle l'itinéraire transite parmi la multitude d'intersections de routes,
détermination d'un segment d'entrée et d'un segment de sortie de l'intersection de routes en fonction de l'itinéraire,
génération d'une indication de direction pour l'intersection de routes, la génération étant basée sur l'utilisation du référentiel optimisé et tenant compte du segment d'entrée, du segment de sortie et des données cartographiques représentant l'intersection de route,
génération d'une instruction de direction basée sur l'indication de direction pour l'intersection de routes, et
transmission de l'instruction de direction à l'utilisateur du dispositif de navigation (300).

2. Procédé selon la revendication 1,
**caractérisé en ce qu'**une intersection de routes, où un utilisateur d'un dispositif de navigation a quitté un itinéraire après avoir reçu une instruction de direction générée sur la base de l'itinéraire, est choisie pour la création du référentiel optimisé.

3. Procédé selon la revendication 2,
**caractérisé en ce que** la génération de l'instruction de direction est basée en plus sur les données cartographiques.

4. Procédé selon la revendication 3,
**caractérisé en ce que** la génération de l'instruction de direction est basée en plus sur un référentiel de base utilisé pour le procédé d'optimisation.

5. Procédé selon l'une des revendications précédentes,
**caractérisé en ce que** le procédé d'optimisation est exécuté par une unité de calcul du dispositif de navigation (500).

6. Procédé selon la revendication 5,
**caractérisé en ce que** les indications de consigne de direction sont enregistrées dans une unité mémoire du dispositif de navigation (500).

7. Procédé selon la revendication 6,
**caractérisé en ce que** l'une des indications de consigne de direction est transférée dans l'unité mémoire lors de la fabrication du dispositif de navigation (500) et qu'une autre indication de consigne de direction est enregistrée dans l'unité mémoire lorsque l'indication de consigne de direction est affectée à l'une des intersections de routes choisies par un utilisateur du dispositif de navigation (500).

8. Dispositif de navigation (500) comportant :
une unité mémoire dans laquelle peuvent être enregistrés des données cartographiques représentant une multitude d'intersections de routes, des indications de consigne de direction se rapportant chacune à une combinaison d'un segment de sortie et d'un segment d'entrée d'une intersection de routes choisie parmi les intersections de routes, plusieurs référentiels de base et un référentiel optimisé pour affecter des segments de route à des directions de bifurcation,
les référentiels de base étant configurés de manière à permettre de générer une instruction de direction pour une intersection de routes en fonction d'un segment d'entrée et d'un segment de sortie de l'intersection de routes, et en fonction des données cartographiques représentant l'intersection de routes,
le dispositif de navigation (500) comportant une unité de calcul configurée pour l'exécution d'un procédé d'optimisation comportant un algorithme évolutif configuré pour créer un référentiel optimisé en fonction des référentiels de base, des indications de consigne de direction et des données cartographiques représentant les intersections de routes choisies,
l'unité de calcul servant à déterminer un itinéraire, à choisir une intersection de routes par laquelle l'itinéraire transite parmi la multitude d'intersections de routes, à déterminer un segment d'entrée et un segment de sortie de l'intersection de routes en fonction de l'itinéraire, à générer une indication de direction pour l'intersection de routes sur la base du référentiel optimisé, du segment d'entrée, du segment de sortie et des données cartographiques représentant l'intersection de routes, et à générer une instruction de direction pour l'intersection de routes sur la base de l'indication de direction, et
le dispositif de navigation (500) comportant une unité de sortie et de commande configurée pour sélectionner les intersections de routes parmi la multitude d'intersections de routes, affecter les indications de consigne de direction aux intersections de routes choisies, par un utilisateur du dispositif de navigation (500), et transmettre l'instruction de direction à l'utilisateur du dispositif de navigation (500).
